(19) Europäisches Patentamt
European Patent Office
Office européen des brevets

(11) Publication number: **0 535 785 A1**

# (12) EUROPEAN PATENT APPLICATION

(21) Application number: **92306634.4**

(51) Int. Cl.$^5$: **C08L 81/06**, C08K 3/38

(22) Date of filing: **20.07.92**

(30) Priority: **30.09.91 US 768015**
**30.09.91 US 768016**
**01.06.92 US 892070**

(43) Date of publication of application:
**07.04.93 Bulletin 93/14**

(84) Designated Contracting States:
**DE FR GB**

(71) Applicant: **AMOCO CORPORATION**
**200 East Randolph Drive**
**Chicago Illinois 60601(US)**

(72) Inventor: **Jack, Gregory Scott**
**1090 Taylor Knoll Close**
**Roswell, Georgia 30202(US)**
Inventor: **El-Hibri, Mohammad Jamal**
**2024 Greenhouse Drive**
**Roswell, Georgia 30076(US)**
Inventor: **Kelly, William Edward**
**4118 Westchester Crossing**
**Roswell, Georgia 30075(US)**
Inventor: **Patel, Sanjay Ranchhodbhai**
**120 Hopewell Chase Court**
**Alpharetta, Georgia 30201(US)**

(74) Representative: **Ritter, Stephen David et al**
**Mathys & Squire 10 Fleet Street**
**London EC4Y 1AY (GB)**

## (54) Flame retardant blends of polysulfone with polycarbonate and/or polyalkylene phthalate.

(57) This invention relates to flame retardant blends of polysulfone, with polyalkylene phthalate and/or polycarbonate, borate salt and polytetrafluoroethylene. The present blends are flame retardant, even at thin part thickness.

EP 0 535 785 A1

This invention relates to flame retardant blends of polysulfone with aromatic polyesters, more particularly aromatic polycarbonate and/or polyalkylene phthalate. The present blends are flame retardant even at thin part thickness.

Blends comprising aromatic polymers such as polyarylsulfones with aromatic polyesters and particularly polyethylene terephthalate do not exhibit adequate flame retardancy due to the inferior flammability characteristics of PET.

Thermoplastic blends of aromatic polysulfones and thermoplastic polyesters are known from Nield, U.S.P. 3,742,087. There is no disclosure of the difficulty of achieving flame retardancy (UL-94 at V-1 to V-O) in thin part thickness (e.g. down to 60 mils) plastics nor the use of polytetrafluoroethylene in conjunction with zinc borate in order to achieve flame retardancy of thin films. Polysulfones have been combined with perfluorocarbon polymers to inhibit drip and improve heat and smoke release. EP 0307,670 discloses that polysulfone with 10 percent perfluorocarbon added has improved heat and smoke release characteristics. It does not show blends of polyester with polysulfone or the advantage of adding borate salts to the combination. EP 0400,935 discloses flame retardant glass fiber reinforced polyesters including polyalkylene terephthalate and another polymer. The synergistic flame retardant use of PTFE and borate salts in such compositions is not taught or suggested. In EP 0364,729 there is shown a flame retardant polycarbonate composition with PTFE, boric oxide and a graft copolymer of methyl methacrylate, butadiene and styrene and/or styrene-maleic anhydride copolymer having a UL-94 of V-0. A polycarbonate composition with PTFE and boric oxide, omitting styrene, only achieved a UL-94 of V-1 at 1.6 mm.

Zinc borate has been used in various thermoplastic compositions such as in U.S.P. 4,049,619 disclosing a thermoplastic composition of a polysulfone, a flame retarding bisphenoxy compound and an enhancing agent such as including zinc borate. In U.S.P. 4,981,895 a molding composition consisting of polyether sulfone or polyether ketone or mixtures thereof in conjunction with zinc borate were said to have improved heat release characteristics. The synergistic combination of zinc borate with PTFE as flame retardants for blends with aromatic polyester or PTFE were mentioned.

Blends of polysulfone and other polymers such as polyalkylene phthalate combine the advantageous properties of impact resistance, hydrolytic stability, dimensional stability, and heat resistance of the polysulfone and yet can be tailored to lower the cost and not interfere with the advantageous properties. Blends of polysulfones and polycarbonate or polyester are known from U.S.P.'s 3,365,517, 3,742,087, 4,369,136, 4,371,672, and 4,746,710. The polymers are rendered more resistant to environmental stress crazing and cracking, the heat distortion temperature is increased and the poly(aryl ether) is made more resistant to thermal stress and aging embrittlement. Furthermore, improved hydrolytic stability is disclosed. Thus, it can be seen that alloying of polysulfone with polyalkylene phthalate leads to blends with improved and commercially important improvement in several physical characteristics.

Unfortunately, flame retardancy of the polysulfone component is significantly lowered by adding aromatic polyesters such as polyalkylene phthalates to polysulfone. Thus, to be able to compete for markets with flame retardant engineering thermoplastic compositions available in the industry it has become particularly critical to improve the flame retardancy of these blend compositions.

The present invention is directed to a blend of polysulfone, polyalkylene phthalate and/or polycarbonate with improved flame retarding properties imparted by the further addition of a borate salt and a synergistic amount of polytetrafluoroethylene (PTFE).

It has been found that when Polytetrafluoroethylene and zinc borate salts in the specified proportions are added to blends of polysulfone with polyester and/or polycarbonate that UL-94 flame retardancy of V-1 to V-0 can be achieved at part thickness down to 60 mils.

The polysulfones, also termed in the art generically as poly(arylethers), are described in U.S.P.'s 3,264,536, 4,108,837, 4,175,175. Preferably the polysulfone comprises the following repeating units:

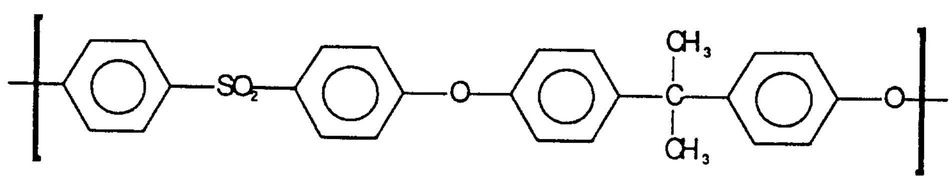

or

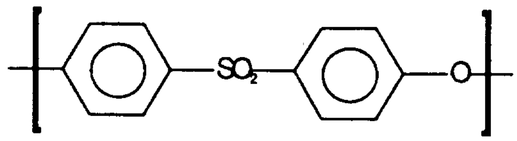

Suitable polysulfones may be readily obtained from commercial sources, or prepared by methods known in the prior art. The polysulfones or poly(aryl ethers) have reduced viscosities in the range of from about 0.35 to about 1.2 dl/g, preferably from about 0.38 to about 1.0 dl/g, as measured in chloroform or another appropriate solvent, at 25 ° C or at another appropriate temperature, at a concentration of 0.2 g/100 ml. At reduced viscosities below about 0.35 dl/g, the poly(aryl ethers) are brittle; at reduced viscosities higher than about 1.2 dl/g, the poly(aryl ethers) have very high melt viscosities and are very difficult to fabricate from the melt.

The weight percent of polysulfone used in compositions of the invention is in the range of about 20 parts to about 95 percent of polymeric material.

The most preferred polysulfone is a poly(aryl ether) including repeating moieties as shown:

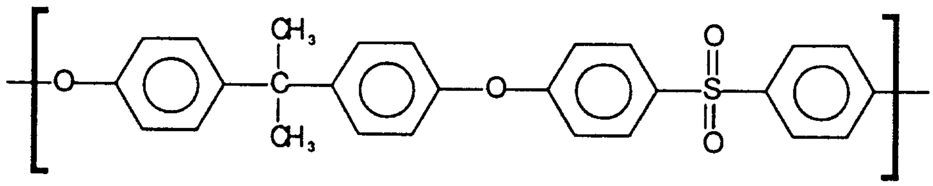

It is available commercially from Amoco Performance Products, Inc. under the trade name Udel® P-3703. It has a reduced viscosity of about 0.43 dl/g as measured in chloroform at a concentration of 0.2 g/dl and 25 ° C. It has a melt flow index of about 16 g/10 min as measured per ASTM method D-1238 using a temperature of 343 ° C and a load of 2.16 kg.

Polyalkylene Phthalates

The polyesters which are suitable for use herein are derived from an aliphatic or cycloaliphatic diol, or mixtures thereof, containing from 2 to about 10 carbon atoms and at least 1 aromatic dicarboxylic acid. The polyesters which are derived from an aliphatic dial and an aromatic dicarboxylic acid have repeating units of the following general formula:

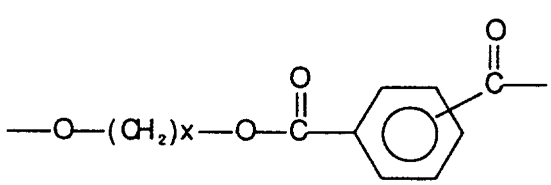

wherein x is an integer of from 2 to 4.

The preferred polyesters are poly(ethylene terephthalate) and poly(butylene terephthalate).

Also contemplated herein are the above polyesters with minor amounts, e.g., from 0.5 to about 2 percent by weight, of units derived from aliphatic acid and/or aliphatic polyols, to form copolyesters. The aliphatic polyols include glycols, such as poly(ethylene glycol). These can be made following the teachings of, for example, U.S.P.'s 2,465,319 and 3,047,539.

The polyesters which are derived from a cycloaliphatic diol and an aromatic dicarboxylic acid are prepared by condensing either the cis- or trans-isomer (or mixtures thereof) of, for example, 1,4-cyclohexanedimethanol with an aromatic dicarboxylic acid so as to produce a polyester having recurring units of the following formula:

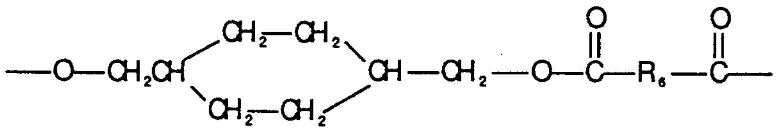

wherein the cyclohexane ring is selected from the cis- and trans-isomer thereof and $R_6$ represents an aryl radical containing 6 to 20 carbon atoms and which is the decarboxylated residue derived from an aromatic dicarboxylic acid.

Examples of aromatic dicarboxylic acids indicated by $R_6$ in formula (26), are isophthalic or terephthalic acid, 1,2-di(p-carboxyphenyl)ethane, 4,4'-dicarboxydiphenyl ether, etc., and mixtures of these. All of these acids contain at least 1 aromatic nucleus. Fused rings can also be present, such as in 1,4-or 1,5-naphthalenedicarboxylic acids. The preferred dicarboxylic acids are terephthalic acid or a mixture of terephthalic and isophthalic acids.

A preferred polyester may be derived from the reaction of either the cis- or trans-isomer (or a mixture thereof) of 1,4-cyclohexanedimethanol with a mixture of isophthalic and terephthalic acids. The polyesters have repeating units of the formula:

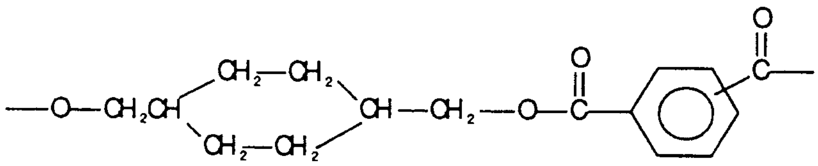

Another preferred polyester is a copolyester derived from a cyclohexane dimethanol, an alkylene glycol and an aromatic dicarboxylic acid. These copolyesters are prepared by condensing either the cis- or trans-isomer (or mixtures thereof) of, for example, 1,4-cyclohexanedimethanol and an alkylene glycol with an aromatic dicarboxylic acid so as to produce a copolyester having repeating units of the following formula:

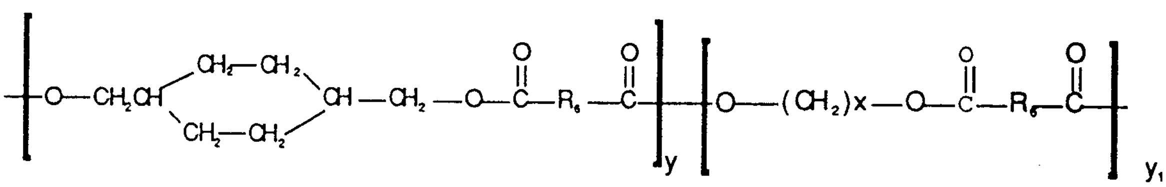

wherein the cyclohexane ring is selected from the cis- and trans-isomers thereof, $R_6$ is as previously defined, x is an integer of 2 to 4, the $y^1$ units comprise from about 10 to about 90 mole percent and the $y^1$ units comprise from about 10 to about 90 mole percent of the total ($y + y^1$) units.

The preferred copolyester may be derived from the reaction of either the cis- or trans-isomer (or mixtures thereof) of 1,4-cyclohexanedimethanol and ethylene glycol with terephthalic acid in a molar ratio of 1:2:3. These copolyesters have repeating units of the following formula:

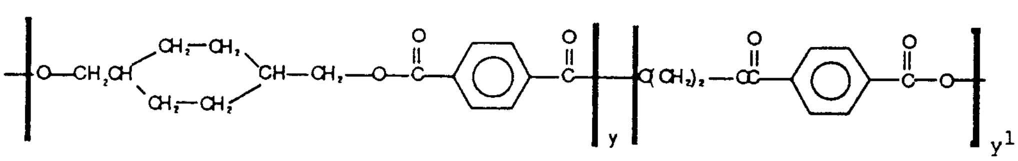

wherein y and $y^1$ are as previously defined.

The polyesters as described herein are either commercially available or can be produced by methods well-known in the art, such as those set forth in, for example, U.S.P. 2,901,466.

The polyesters used herein have an intrinsic viscosity of from about 0.4 to about 2.0 dl/g as measured in a 60:40 phenol/tetrachloroethane mixture or similar solvent at 23-30 ° C.

The Aromatic Polycarbonates

The thermoplastic aromatic polycarbonate resins that can be employed herein are homopolymers and copolymers and mixtures thereof, which have an intrinsic viscosity of from about 0.4 to about 1.0 dl/g as measured in methylene chloride or in chloroform at 25°C. The polycarbonates are prepared by reacting a dihydric phenol with a carbonate precursor. Typical of some of the dihydric phenols that may be employed are bisphenol-A, bis(4-hydroxyphenyl)methane, 2,2-bis(4-hydroxy-3-methylphenyl)-propane, 4,4-bis(4-hydroxyphenyl)heptane, 2,2-bis(3,5-dibromo-4-hydroxyphenyl)propane, 3,3'-dichloro-4,4'dihydroxydiphenyl)-methane, and the like. Other dihydric phenols of the bisphenol type are described in, for example, U.S.P.'s 2,999,835, 3,028,365 and 3,334,154.

It is, of course, possible to employ two or more different dihydric phenols or a copolymer of a dihydric phenol with a glycol or with hydroxy or acid terminated polyesters.

The carbonate precursor may be either a carbonyl halide, a carbonate ester, or a haloformate. The carbonyl halides which can be employed herein are carbonyl bromide, carbonyl chloride and mixtures thereof. Typical of the carbonate ester which may be employed herein are diphenyl carbonate, di-(halophenyl)carbonates, such as di(chlorophenyl)carbonate or di(bromophenyl)carbonate; etc., di-(alkylphenyl)carbonates such as di(tolyl)carbonate, di(naphthyl)carbonate, di(chloronaphthyl)carbonate, etc., or mixtures thereof. The haloformates suitable for use herein include bishaloformates of dihydric phenols, for example, bischloroformates of bisphenol-A, of hydroquinone, etc., or glycols, for example, bishaloformates of ethylene glycol, neopentyl glycol, polyethylene glycol, etc. While other carbonate precursors will be apparent to those skilled in the art, carbonyl chloride, also known as phosgene, is preferred.

The aromatic polycarbonate polymers are commercially available and may be prepared by methods well-known in the art. These methods are described in, for example, U.S.P.'s 3,153,008 and 3,028,365. The preferred polycarbonate is bisphenol-A polycarbonate including the following repeating units:

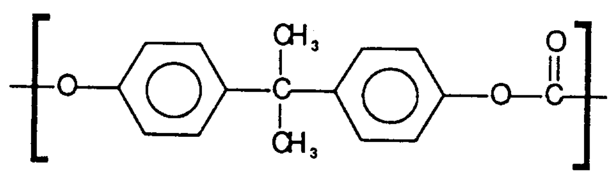

Borate Salts

The borate used is preferably anhydrous, having water amounts less than 0.2 weight percent of the borate; hydrated borate or borates with greater water content can result in unprocessable compositions or result in hydrolytic degradation of the polyalkylene phthalate and polycarbonate components during melt extrusion to prepare the blends. Any suitable anhydrous zinc borate may be used. Anhydrous zinc borate having a particle size of 6-10 microns, is available as XPI-187 from U.S. Borax and is produced by thermal dehydration of zinc borate at 500°C. The amount of zinc borate to be used is an effective amount to achieve flame retardance, and preferably is about 1.0 to about 10.0 parts by weight per 100 parts combined weight of the total composition.

Polytetrafluoroethylene (PTFE)

PTFE can be purchased commercially from a number of U.S. and foreign suppliers in several physical forms including the following:

Water Dispersion: This fine particle form can be either of the fibrillating or non-fibrillating type. It is typically provided as 50-60% PTFE suspension in water, and is typically used in coatings and for the impregnation of porous structures. Algoflon D-60G supplied by Ausimont, Inc. is one such grade.

Paste: This is a high molecular weight form of PTFE that is prepared as a dispersion of about 0.2 microns. This material is then coagulated to give particles of about 400 to 500 microns. These materials are soft and fibrillate at room temperature. Typical grades of this type are: Algoflon DF 1, DF 200 and DFC.

Granular: This is a high molecular weight PTFE that is made in a suspension process that results in a 20 micron size powder. This material fibrillates at high temperature or under high sheer conditions. Typical grades are: Algoflon F5, F2 and F6.

Wax: This is a low molecular weight PTFE that has no tendency to fibrillate. This material is usually made by degrading high molecular weight materials using radiation. The particle size varies by grade and is typically 6 to 25 microns. This type can be formed from direct reaction from the monomer, but that is not the process that Ausimont uses. Typical grades are: Polymist F-5A, F-5, and F-510.

Preparation of Blends

In preparing the blends of the present invention the individual components are commonly provided in the form of chips, pellets or powders, and physically mixed together in any appropriate apparatus, e.g., a mechanical drum tumbler. The physical mixture then requires drying, preferably under vacuum or in a desiccated circulating air oven, although any other suitable apparatus can be used. The purpose of the drying step is to remove water from the physical mixture so as to prevent hydrolytic degradation of the polyalkylene phthalate and polycarbonate components. After the mixture of the solid polymer particles (which, optionally, may also contain reinforcing filler, fiber, and the like - vide infra) has been dried, the blend can be prepared. A convenient method of forming the blend is melt extrusion. The extrusion apparatus thoroughly mixes the polymers in the melt and then extrudes the blend in the form of a strand which, upon solidification, can be broken up into chips or pellets. Both single screw and twin-screw extruders can be used for the preparation of the instant blends.

Any suitable procedure can be used to compound the compositions of the invention, and the solid components can be mixed with each other in any particular order. Applicants prefer to blend desirable amounts of all solids present and then heat the resulting mixture to about 100 °C or greater above the transition temperature (Tg) of the highest Tg polymer in the mixture and when blending a semicrystalline polymer such as PET, the processing temperature must also be maintained about 50 °C above the melting point of the semicrystalline polymer. The molten mixture is then mixed for any suitable period to achieve thorough dispersion of the additive(s) and mixing of the polymers present, and then extruded and cooled into any desirable shape. Such a process can be conveniently carried out with commercial extruders such as Berstorff co-rotating twin screw units.

All materials were prepared by first dry blending the components using a mechanical blender (turned end over end). They were then compounded using a Berstorff ZE25, 25 mm dianetic corotating twin-screw extruder.

The resulting mixture is then fed to an extruder operating at about 265 °C, and the extrudate is formed into pellets. These pellets are then injection-molded at about 300 °C into test bars of about 5 inches by 1/2 inch by about 1/16 inch thick. Five test bars are subject to the test procedure set forth in Underwriters' Laboratories Inc., Subject UL-94, Burning Test for Classifying Materials. In accordance with this test procedure, materials so investigated are rated either V-0, V-1, or V-2 based on the results of 5 specimens. The criteria for each rating per UL-94 is shown under flammability testing.

The instant alloys can be melt processed in the substantial absence of polymer degradation to form a variety of relatively stiff shaped articles, e.g., molded three-dimensional articles, fibers, films, tapes, etc.

Articles may also be molded from a molding compound which includes, as one component, the blend of the present invention. Such a molding compound incorporates into the blend of the present invention approximately 1 to 50 percent, preferably approximately 5 to 35 percent by weight, based upon the total weight of the molding compound, of a solid filler and/or reinforcing agent. Representative fibers which may serve as reinforcing media include glass fibers, asbestos, graphitic carbon fibers, amorphous carbon fibers, synthetic polymeric fibers, aluminum fibers, aluminum silicate fibers, oxide of aluminum fibers, titanium fibers, magnesium fibers, wollastonite, rock wool fibers, steel fibers, tungsten fibers, cotton, wool, and wood cellulose fibers, etc. Representative filler materials include glass, calcium silicate, silica, clays, talc, mica, carbon black, titanium dioxide, wollastonite, polytetrafluoroethylene, graphite, alumina trihydrate, sodium aluminum carbonate, barium ferrite, etc.

The polymers may also include additives such as pigments, thermal stabilizers, ultraviolet light stabilizers, plasticizers, lubricants, mold release agents and the like.

The materials of this invention may be fabricated into any desired shape, i.e. moldings, coatings, films or fibers.

The following designations are used throughout to describe the polymers referred to in the examples:

Polysulfone (PSF) - A poly(aryl ether) having the repeat unit of formula:

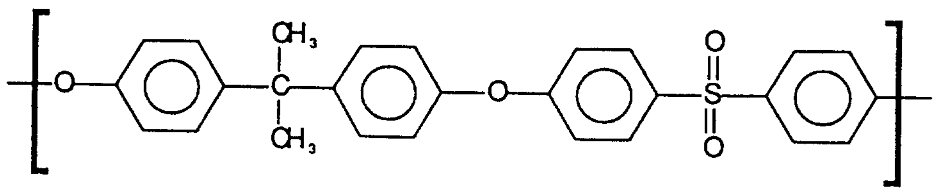

It is available commercially from Amoco Performance Products, Inc. under the trade name Udel® P-3703. It has a reduced viscosity of about 0.43 dl/g as measured in chloroform at a concentration of 0.2 g/dl and 25°C. It has a melt flow index of about 16 g/10 min as measured per ASTM method D-1238 using a temperature of 343°C and a load of 2.16 kg.

Another polysulfone that may be used includes the following repeating unit. Such polysulfone is available commercially from Imperial Chemical Industries, Ltd. or Amoco Performance Products, Inc.:

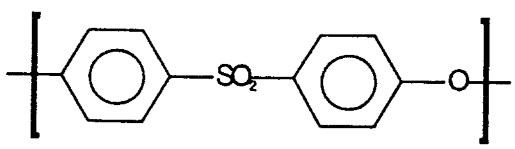

PET: Poly(ethylene terephthalate) - A polymer having the following repeat unit structure:

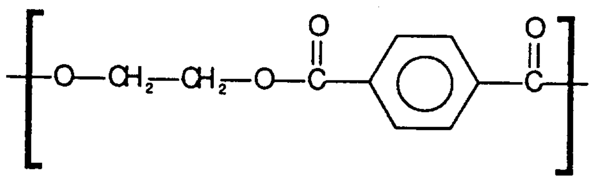

This polymer is widely available from a number of U.S. suppliers. The resin used carried the trade name Cleartuff 7202 and is a product of Goodyear Co. This material has a Tg of about 80° C in the fully amorphous state (the Tg increases slightly with the level of crystallinity). The polymer has a crystalline melting point of about 260°C as measured by differential scanning calorimetry.

PC: Bisphenol-A polycarbonate - a polymer including the repeat unit of the formula:

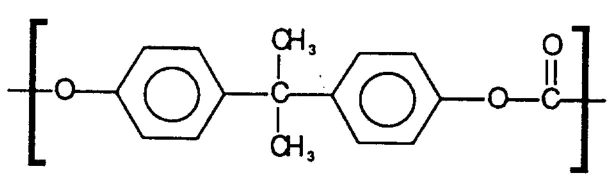

It is available commercially from several U.S. suppliers. The polycarbonate used in this work is available from General Electric Company under the trade name Lexan 104. The resin was characterized for its molecular weight by gel permeation chromatography, also using THF as solvent and a calibration based on polystyrene standards. The number-average molecular weight ($M_n$) was determined to be about 20,000. The polymer was found to have a reduced viscosity of 0.52 dl/g in chloroform at a concentration of 0.2 g/dl. The glass transition temperature of this polymer is 150°C as measured by dynamic mechanical thermal analysis (DMTA).

Lexan 2015 is a flame retardant polycarbonate polymerized using a tetrabromobisphenol A copolymer. The polymer used in this experiment had a melt flow of 4.8 g/10 minutes which met the specifications of 4.1 to 5.8 g/10 minutes.

ZnO is zinc oxide, an inorganic filler that when reacted with boric acid is able to produce zinc borate. It was used in powder form.

Ultracarb is a very fine white powder, flame retardant with a chemical composition of $Mg_3Ca(CO_3)_4$. It is produced commercially by Anzone Inc. It is characterized by a decomposition temperature approximately

30°C higher than alumina trihydrate.

Flammability Testing

Specimens obtained from the experiments embodied in the examples below were tested according to UL-94 vertical burn lest specifications. All specimens tested had the nominal dimensions: 5" x 0.5" x 0.062" obtained via injection molding. Additional details are provided in the examples which follow. Furthermore, definition of various UL-94 vertical flammability classifications are as follows.

**Flammability Ratings**

"94 V -0":

No single flaming combustion after removal of the igniting flame shall exceed 10 seconds and none of the specimens shall drip flaming particles which ignite absorbent surgical cotton placed 12" below the specimen. Total flame out time for all 5 specimens (10 ignitions) cannot exceed 50 seconds.

"94 V-1":

No single flaming combustion after removal of the igniting flame shall exceed 30 seconds and none of the specimens shall drip flaming particles which ignite absorbent surgical cotton placed 12" below the specimen. Total flame out time for all 5 specimens (10 ignitions) cannot exceed 250 seconds.

"94 V -2":

No single flaming combustion after removal of the igniting flame shall exceed 30 seconds. The specimens drip flaming particles which burn only briefly, some of which ignite absorbent surgical cotton placed 12" below the specimen. Total flame out time for all 5 specimens (10 ignitions) cannot exceed 250 seconds.

In addition, a test bar which continues to burn for more than 30 seconds after removal of the igniting flame is classified, not by UL-94, but by the standards of the instant invention, as "burns." Further, UL-94 requires that all test bars in each test group must meet the V type rating to achieve the particular classification. Otherwise, the 5 bars receive the rating of the worst single bar. For example, if 1 bar is classified as 94 V-2 and the other 4 are classified as 94 V-0, then the rating for all 5 bars is 94 V-2.

The following examples are intended to give specific illustrations of the practice of this invention and are not intended in any way to limit the scope of this invention.

Comparative Example 1(C-1)

A 75/25 percent by weight blend of Udel® P-3703 polysulfone (PSF) and Cleartuf® 7207 poly(ethylene terephthalate) (PET) were tumble-mixed and dried. The dry pellet mix was then melt-blended using a twin-screw, 25mm diameter Berstorff extruder at a melt temperature of about 290°C. The blend was dried and injection-molded into a cavity with nominal dimensions of 5.0 x 0.5 x 0.062 inch using a 28-ton Arburg injection molding machine. The barrel temperature profile used was 270-295°C with a nozzle temperature of 295°C. The mold temperature was set at 90°C. The molded 0.062" thick specimens were tested for flammability in accordance with the UL-94 vertical burn specification. The results from this test, which are given in Table 1, indicated that this blend does not meet any of the UL-94 V classifications for flammability resistance. That was because the burn times were exceeded for both the maximum burn time for a single application as well as for the cumulative burn time for the specimens tested.

Comparative Example 2(C-2]

A 65/35 percent by weight blend of the same PSF and PET resins used in Comparative Example 1(C-1) was prepared by first drying the resins as per Comparative Example 1, and then extruding the dry mix through a non-vented twin-screw Brabender counter-rotating twin-screw unit. The blend was run through the extruder at a rate of 4.5 lb/hr and the melt temperature was about 290°C. The screw speed of extruder was 40 rpm. The blend sample thus produced was dried again prior to injection molding into 0.062"-thick specimens using the Arburg injection molding machine and conditions described in Comparative Example

1. UL-94 flammability testing was performed on specimens from this polymer blend and the results are summarized in Table 1. The specimens from this sample burned vigorously on the first flame application which did not stop to allow a second flame application. Additionally, 4 out of 5 specimens dripped igniting cotton on the floor of the test chamber. This material thus failed the UL-94 vertical flammability test in all its classifications.

Example 1

The following blend composition was prepared using weight percentages of the various components as indicated: Udel P-3703 (68.63%), PET (22.87%), zinc borate (6%), and F5A non-fibrillating PTFE (2.5%). The blend was prepared and tested following procedures substantially similar to those described in Comparative Example 2. The UL-94 flammability results obtained for this composition show a marked improvement in flammability over the corresponding control cases embodied in Comparative Examples 1 and 2. The flammability rating based on the burning behavior and durations was V-1. The burn times are given in Table 1. The synergistic effect of PTFE and zinc borate is thus demonstrated.

Example 2

The following blend composition was prepared using weight percentages of the various components as indicated: Udel P-3703 (65.25%), PET (21.75%), Zinc borate (9%), and F5A non-fibrillating PTFE (4%). The blend was prepared and tested following procedures substantially similar to those described in Comparative Example 2. The UL-94 flammability results obtained for this composition show a marked improvement in flammability over the corresponding control case embodied in Example C-2. Comparing with Example C-2, there is also a significant benefit obtained from increasing the level of the two flame retardants in the composition. The flammability rating of this formulation based on the burning behavior and durations was V-1. The key burn times are given in Table 1.

Examples 3-5

Three PSF/PET flame retarded blend compositions were prepared from Udel® P-3703 PSF, PET, zinc borate, and Algoflon DF-1, another fibrillating PTFE supplied by Ausimont, Inc. For each of the three formulations the ratio of PSF to PET was maintained at 65/35 by weight. All three formulations contained 6 weight percent zinc borate and the level of DF-1 was 1, 2, and 3 weight percent, respectively, for the three formulations. The exact weight percentages of the four components are given in Table 1. These materials were prepared, molded into 0.062"-thick ASTM bars and tested for flammability behavior using very similar procedures to those employed in Example 2. The UL-94 flammability rating for these formulations was V-1 for all three cases, and the burn times decreased for the three formulations, as shown in Table 1, in a manner consistent with the level of DF-1 fluoropolymer.

Examples 6 and 7

Two more formulations were prepared similar to those of Examples 3-5 above, except that the level of DF-1 was maintained at 2 weight percent while the level of zinc borate was lowered to 4 and 2 weight percent, respectively, the exact compositions are, again, given in Table 1 along with the UL-94 flammability results. While both of these formulations afforded a V-1 flammability rating, the composition containing 4 weight percent zinc borate gave significantly better performance than that containing only 2 percent zinc borate. This supports the notion that a synergistic effect exists in this dual flame retardant system. This synergism is apparently lost if the ratio of zinc borate to PTFE is either too high or too low.

Example 8 and Comparative Example 3(C-3)

To investigate the effect of PSF/PET ratio on the flammability performance of these formulations, two additional compositions were prepared in which this ratio was set at 69/23 and 50.6/41.9, while the levels of DF-1 PTFE and zinc borate were maintained at 2 and 6 weight percent respectively for both compositions. The pertinent data for these two examples are given in Table 1. The UL-94 result for the first formulation is V-1 with a relatively low cumulative burn time of about 90 seconds. For the second formulation (C-3), on the other hand, no acceptable vertical flammability rating is achieved with the total burn well exceeding the 250 sec limit required for V-2. It is thus noted that the UL-94 flammability performance is sensitive to the

PSF/PET ratio. For weight ratios significantly lower than 60/40 PSF/PET it is unlikely that the flame retardance additives of this invention will be effective.

Other compositions were prepared by the same method as Examples 1-8. The compositions and results are shown in Table I.

Examples O thru U as shown in the following Table I depict that the ternary blends of polyarylethersulfone/polyethylene (terephthalate)/polycarbonate of the present invention achieve a UL-94 vertical flammability rating. It also depicts that while a nonfibrillating type of polytetrafluoroethylene helps flame retardance, a fibrillating type is more effective.

TABLE 1

| Example No. | D | E | F | G | H |
|---|---|---|---|---|---|
| PSF Udel P1700 (wt %) | 97 | 95 | 93 | 97.5 | 95 |
| PSF Udel P3703 | | | | | |
| PET: Cleartuf 7202 | | | | | |
| PC: Makrolon 3108 | | | | | |
| Zinc Borate | 3 | 5 | 7 | | |
| F5A PTFE | | | | 2.5 | 5 |
| DF-1 Algoflon PTFE | | | | | |
| D-60G PTFE | | | | | |
| OCF 497 DB Fiber Glass | | | | | |
| Kemamide* S-221 | | | | | |
| Decabromo Diphenylether | | | | | |
| Total Burn (sec) | 60 | 79 | 37 | 22 | 24.5 |
| Highest Single Burn | 23 | 32 | 8 | 5 | 4 |
| Rating (UL-94) | V-2 | Burns | V-0 | V-0 | V-0 |

* Kemanide S-221- is an amide wax lubricating agent supplied by Witco Corp.

TABLE 1 (Cont'd.)

| Example No. | C-1 | 1 | 2 | C-2 |
|---|---|---|---|---|
| PSF: Udel P1700 (wt %) | | | | |
| PSF: Udel P-3703 | 75 | 68.63 | 65.25 | 65 |
| PET Cleartuf 7202 | 25 | 22.87 | 21.75 | 35 |
| PC: Makrolon 3108 | | | | |
| Zinc Borate | | 6 | 9 | |
| F5A PTFE | | 2.5 | 4 | |
| DF-1 Algoflon PTFE | | | | |
| D-60G PTFE | | | | |
| OCF 497 DB Fiber Glass | | | | |
| Kemamide W40 | | | | |
| Decabromo Diphenylether | | | | |
| Total Burn (sec) | >250 | 111 | 66 | 384 |
| Highest Single Burn | >60 | 30 | 14 | >75 |
| Rating (UL-94) | Burns | V-1 | V-1 | Burns |

TABLE 1 (Cont'd.)

| Example No. | 3 | 4 | 5 | 6 | 7 | 8 |
|---|---|---|---|---|---|---|
| PSF Udel P1700 (wt %) | | | | | | |
| PSF Udel P3703 | 60.45 | 59.80 | 59.15 | 61.10 | 62.40 | 69 |
| PET: Cleartuf 7202 | 32.55 | 32.20 | 31.85 | 32.90 | 33.60 | 23 |
| PC: Makrolon 3108 | | | | | | |
| Zinc Borate | 6 | 6 | 6 | 4 | 2 | 6 |
| F5A PTFE | | | | | | |
| DF-1 Algoflon PTFE | 1 | 2 | 3 | 2 | 2 | 2 |
| D-60G PTFE | | | | | | |
| OCF 497 DB fiberglass | | | | | | |
| Kemamide S-221 | | | | | | |
| Decabromo Diphenylether | | | | | | |
| Total Burn (sec) | 170.3 | 150.6 | 129.6 | 128.2 | 168.3 | 91.3 |
| Highest Single Burn | 27 | 27 | 21 | 22 | 27 | 17 |
| Rating (UL-94) | V-1 | V-1 | V-1 | V-1 | V-1 | V-1 |

TABLE 1 (Cont'd.)

| Example No. | C-3 | O | P | Q | R | S | T | U |
|---|---|---|---|---|---|---|---|---|
| PSF: Udel P1700 (wt %) | | | | | | | | |
| PSF: Udel P3703 | 50.6 | 41 | 41 | 41 | 40 | 40.5 | 40.5 | 39.9 |
| PET Cleartuf 7202 | 41.4 | 23 | 22.5 | 23 | 22 | 22.5 | 20 | 19.7 |
| PC: Makrolon 3108 | | 7.0 | 6.0 | 7 | 7 | 7 | 9.5 | 9.4 |
| Zinc Borate | 6 | | 6 | 3 | 4 | 4 | 4 | 4 |
| F5A PTFE | | | 2.5 | | | | | |
| DF-1 Algoflon PTFE | 2 | | | 3 | 4 | 4 | 4 | 4 |
| D-60G PTFE | | | | | | | | |
| OCF 497 DB fiberglass | | 22 | 21 | 22 | 22 | 22 | 22 | 22 |
| Kemamide S-221 | | 1.0 | 1.0 | 1.0 | 1.0 | -- | -- | 1 |
| Decabromo Diphenylether | | 6.0 | | | | | | |
| Total Burn (sec) | 464.7 | | | 162 | 187 | 168 | 104 | 178 |
| Highest Single Burn | 123 | | | | | | | |
| Rating (UL-94) | Burns | V-0 | V-2 | V-1 | V-1 | V-1 | V-1 | V-1 |

Comparative Example 4(C-4)

A 50/50 by weight blend of Udel® P-1700 polysulfone (PSF) and Lexan 104 polycarbonate (PC) was prepared as follows. Pellets of the two resins were dry-blended in the right proportion and then dried in a Lydon convection oven at 300 ° F overnight. The pellets were then melt-blended using a Berstorff 25 mm twin screw extruder, a screw rpm of 130, and a melt temperature of about 300 ° C. The throughput rate through the extruder was about 15 lb/hr. The extruder used was equipped with three vent ports. The first two vent ports were open to the atmosphere while the third one was operated under a partial vacuum of 20 in Hg. The pellets obtained from this melt-compounding step were dried overnight at 300 ° C in the same air convection oven, then injection molded using a 28-ton Arburg injection molding machine into 5"x.50"x0.062" ASTM specimens for flammability evaluation. The blend was molded using a barrel temperature setting profile of 290 ° -315 ° C, a nozzle set at 315 ° C, a mold temperature of 110 ° C, and an injection pressure of 950 psi. Flammability testing was conducted per Underwriters' Laboratories specification UL-94 for vertical burning. The results from this flammability testing indicated that this blend falls within the V-1 classification based on the burn times encountered. These results are given in Table 2.

Example 9

A blend of Udel® P-1700 (45.75%), PC (45.75%), T-60 fibrillating fluoropolymer supplied by Du Pont (2.5%), and zinc borate supplied by U.S. Borax (6%) was prepared and tested according to procedures substantially similar to those described in comparative Example 4. The UL-94 flammability rating obtained for this material was V-1.

Comparative Example 5(C-5)

This comparative example illustrates that the presence of zinc borate is not sufficient to effect an improvement in the flammability resistance of PSF/PC blends. The blend prepared here consisted of Udel® P-1700 (47%), PC (47%), and zinc borate (6%). The blend was prepared and tested according to procedures substantially similar to those described in Example 9. The UL-94 flammability test gave a flammability rating of V-1 for this formulation, with the burn time results given in Table 2. There was no improvement (and possibly a decrease) in flammability resistance over the control case with only the base resins present (Comparative Example 4). The presence of only zinc borate as the flame retardant is therefore not adequate for the proper practice of this invention.

Comparative Example 6(C-6)

This comparative example illustrates that the presence of only a non-fibrillating PTFE as the sole flame retardant is not sufficient to yield the flame retardancy by the practice of this invention. A formulation was prepared consisting of the following: Udel® P-1700 (48.75%), PC (48.75%), and Algoflon Polymist F5A PTFE (2.5%), which is of the non-fibrillating type. The formulation was prepared and tested following procedures substantially similar to those described in Comparative Example 4. The UL-94 flammability of this composition did not show an improvement over that of the base resins blended in a 50/50 weight ratio (Comparative Example 4).

Examples 10 and 11

Two formulations comprised of Udel® P-1700, PC, zinc borate and F5A were prepared using the weight ratios specified in Table 2. These two formulations were prepared and tested using procedures very similar to those described under comparative example 4. The UL-94 flammability test performed on specimens from these two compositions gave V-1 flammability rating for both compositions while an improvement (reduction) in total burning time was still observed, which was also consistent with the level of the two flame retardant components.

Examples 12 and 13

Two additional formulations prepared essentially exactly as those of Examples 10 and 11 except for replacing the non-fibrillating F5A PTFE component with the fibrillating T-60 PTFE at the same levels used in Examples 10 and 11, respectively. The flammability data from these two compositions revealed substantially improved flammability resistance as evidenced by the burn times listed in Table 2. The UL-94 flammability rating for these two compositions was V-0.

Other examples were performed using the same methods as set forth above. The compositions and results are shown in Table 2 as D-2 through T-2.

TABLE 2

| Example No. | C-4 | 9 | D-2 | E-2 | F-2 | G-2 |
|---|---|---|---|---|---|---|
| PSF Udel P1700 (wt %) | 50 | 45.75 | 44.75 | 46.75 | 44.25 | 44.75 |
| PC Lexan 104 | 50 | 45.75 | 44.75 | 46.75 | 44.25 | 44.75 |
| PC Lexan 2015 | | | | | | |
| $ZnBO_3$ Ground | | | | | | |
| $ZnBO_3$ | | 6 | 8 | 4 | 6.0 | |
| Boric Acid | | | | | | |
| PTFE F5A | | 2.5 | 2.5 | 2.5 | 2.5 | 2.5 |
| DF-1 Algoflon | | | | | | |
| T-60 | | | | | | |
| ZnO | | | | | | |
| Ultracarb | | | | | | 6.0 |
| Antimony Oxide | | | | | 3.0 | |
| KZTPP | | | | | | |
| Total Burn (sec) | 52 | 44 | 66 | 101 | - | - |
| Highest Single Burn | 13 | 17 | 32 | 59 | - | - |
| Rating (UL-94) | V-1 | V-1 | V-2 | V-2 | - | - |
| Failure load (lbs) | | | | | | |
| Max. load (lbs) | | | | | | |
| Sp Gr | | | | | | |
| Flex Strength (psi) | | | | | | |

TABLE 2 (Cont'd.)

| Example No. | H-2 | I-2 | J-2 | K-2 | L-2 | M-2 |
|---|---|---|---|---|---|---|
| PSF Udel P1700 (wt %) | 50/50 | 50 | 49.5 | 46.5 | 46.5 | |
| PC Lexan 104 | 50/50 | | 49.5 | 46.5 | 46.5 | |
| PC Lexan 2015 | | 50 | | | | |
| $ZnBO_3$ Ground | | | | 6.0 | 6.0 | |
| $ZnBO_3$ | | | | | | |
| Boric Acid | | | | | | |
| PTFE F5A | | | | | | |
| DF-1 Algoflon | | | | | 1.0 | |
| T-60 | | | | | | |
| ZnO | | | | | | |
| Ultracarb | | | | | | |
| Antimony Oxide | | | | | | |
| KZTPP | | | 1.0 | 1.0 | | |
| Total Burn (sec) | 58/54 | - | - | 34* | 5 | |
| Highest Single Burn | 13/11 | - | - | 12* | 1 | |
| Rating (UL-94) | V/V-1 | - | - | V-1 | V-0 | - |
| Failure load (lbs) | | | | | | |
| Max. load (lbs) | | | | | | |
| Sp Gr | | | | | | |
| Flex Strength (psi) | | | | | | |
| *2 bars only | | | | | | |

TABLE 2 (Cont'd.)

| Example No. | N-2 | O-2 | P-2 | Q-2 | R-2 | S-2 |
|---|---|---|---|---|---|---|
| PSF Udel P1700 (wt %) | 48 | 49.5 | 49.5 | 48 | 48 | 46.5 |
| PC Lexan 104 | 48 | 49.5 | 49.5 | 48 | 48 | 46.5 |
| PC Lexan 2015 | | | | | | |
| $ZnBO_3$ Ground | 3.0 | | | | 3.0 | |
| $ZnBO_3$ | | | | 3.0 | | |
| Boric Acid | | | | | | 4.5 |
| PTFE F5A | | | 0.5 | | 0.5 | |
| DF-1 Algoflon | 1.0 | 1.0 | 0.5 | 1.0 | 0.5 | 1.0 |
| T-60 | | | | | | |
| ZnO | | | | | | 1.5 |
| Ultracarb | | | | | | |
| Antimony Oxide | | | | | | |
| KZTPP | | | | | | |
| Total Burn (sec) | 20 | - | 30.5 | 20 | 27 | 11.5 |
| Highest Single Burn | 6.2 | - | 9.0 | 4 | 10.2 | 4.7 |
| Rating (UL-94) | | - | V-0 | V-0 | V-0 | V.0 |
| Failure load (lbs) | 30.3 | - | 32 | 29.7 | 30.6 | 2.5 |
| Max. load (lbs) | 101 | - | 107 | 99 | 102 | 8 |
| Sp Gr | 1.24 | - | 1.22 | 1.24 | 1.24 | 1.25 |
| Flex Strength (psi) | 16720 | - | 16660 | 16760 | 16760 | 15330 |

TABLE 2 (Cont'd.)

| Example No. | C-5 | C-6 | T-2 | 10 | 11 | 12 |
|---|---|---|---|---|---|---|
| PSF Udel P1700 (wt %) | 47 | 48.75 | 45.75 | 44.75 | 43.5 | 44.75 |
| PC Lexan 104 | 47 | 48.75 | 45.75 | 44.75 | 43.5 | 44.75 |
| PC Lexan 2015 | | | | | | |
| $ZnBO_3$ Ground | | | | | | |
| $ZnBO_3$ | 6 | | 6 | 7.5 | 9 | 7.5 |
| Boric Acid | | | | | | |
| PTFE F5A | | 2.5 | | 3 | 4 | |
| DF-1 Algoflon | | | | | | |
| T-60 | | | 2.5 | | | 3.0 |
| ZnO | | | | | | |
| Ultracarb | | | | | | |
| Antimony Oxide | | | | | | |
| KZTPP | | | | | | |
| Total Burn (sec) | 75 | 55 | 20 | >42.5 | 32 | 20 |
| Highest Single Burn | 16 | 17 | 7 | 16 | 12 | 5 |
| Rating (UL-94) | V-1 | V-1 | V-0 | V-1 | V-1 | V-0 |
| Failure load (lbs) | | | | | | |
| Max. load (lbs) | | | | | | |
| Sp Gr | | | | | | |
| Flex Strength (psi) | | | | | | |

TABLE 2 (Cont'd.)

| Example No. | | 13 | | | | |
|---|---|---|---|---|---|---|
| PSF Udel P1700 (wt %) | | 43.5 | | | | |
| PC Lexan 104 | | 43.5 | | | | |
| PC Lexan 2015 | | | | | | |
| PET Cleartuf | | | | | | |
| Makrolon 3108 | | | | | | |
| $ZnBO_3$ Ground | | | | | | |
| $ZnBO_3$ | | 9 | | | | |
| Boric Acid | | | | | | |
| PTFE F5A | | | | | | |
| DF-1 Algoflon | | | | | | |
| T-60 | | 4 | | | | |
| ZnO | | | | | | |
| Ultracarb | | | | | | |
| Antimony Oxide | | | | | | |
| KZTPP | | | | | | |
| Total Burn (sec) | | <15 | | | | |
| Highest Single Burn | | 4 | | | | |
| Rating (UL-94) | | V-0 | | | | |
| Failure load (lbs) | | | | | | |
| Max. load (lbs) | | | | | | |
| Sp Gr | | | | | | |
| Flex Strength (psi) | | | | | | |

## Claims

1. A flame retardant polymer blend comprising (a) polysulfone; (b) at least one aromatic polyester selected from polyalkylene phthalate and aromatic polycarbonate; (c) borate, salt; and (d) polytetrafluoroethylene.

2. A flame retardant polymer blend according to claim 1 comprising aromatic polycarbonate.

3. A flame retardant polymer blend according to claim 1 or 2 comprising polyalkylene phthalate.

4. A flame retardant polymer blend according to claim 3 comprising a weight ratio of polysulfone to polyalkylene phthalate of 95:5 to 60:40.

5. A flame retardant polymer blend according to any preceding claim comprising zinc borate.

6. A flame retardant polymer blend according to any preceding claim wherein said polytetrafluoroethylene is present in the amount of 0.5 to 10 weight percent based on total composition weight.

7. A flame retardant polymer blend according to any preceding claim wherein the polysulfone comprises repeat units selected from:

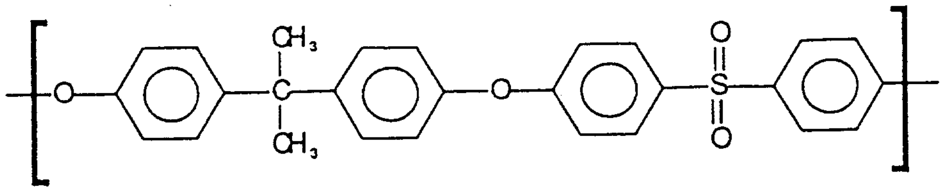

and

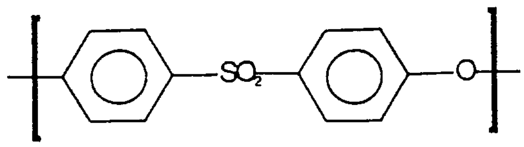

8. A flame retardant polymer blend according to any preceding claim wherein said aromatic polyester is selected from polyalkylene phthalates comprising the following repeating unit:

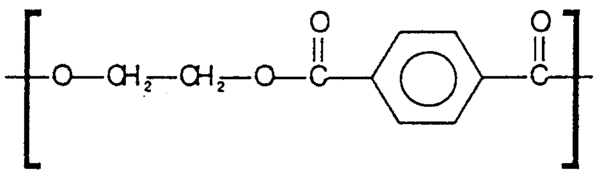

and aromatic polycarbonates comprising the following repeat unit:

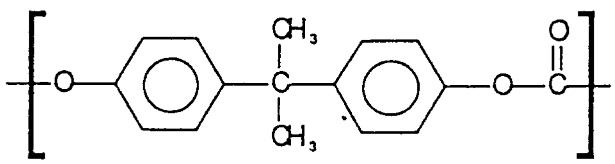

9. A flame retardant polymer blend according to any preceding claim comprising 35 to 85 weight percent polysulfone, 10 to 35 weight percent aromatic polyester, 3 to 5 weight percent borate salt and 3 to 5 weight percent polytetrafluoroethylene.

10. A flame retardant polymer according to any preceding claim further comprising about 5 to 35 weight percent glass fibers.

European Patent Office

# EUROPEAN SEARCH REPORT

Application Number

EP 92 30 6634

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 444 589 (SUMITOMO CHEMICAL CO.) 4 September 1991 |  | C08L81/06<br>C08K3/38 |
| A | EP-A-0 321 236 (TOSOH CO.) 21 June 1989 |  |  |
| A | EP-A-0 132 094 (SUMITOMO CHEMICAL CO.) 23 January 1985 |  |  |
| A | EP-A-0 089 206 (SUMITOMO CHEMICAL CO.) 21 September 1983 |  |  |

TECHNICAL FIELDS SEARCHED (Int. Cl.5 )

C08L
C08K

The present search report has been drawn up for all claims

| Place of search | Date of completion of the search | Examiner |
|---|---|---|
| THE HAGUE | 16 DECEMBER 1992 | STIENON P.M.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)